# EUROPÄISCHE PATENTSCHRIFT

(11) **EP 4 253 235 B1**
(45) Veröffentlichungstag und Bekanntmachung des Hinweises auf die Patenterteilung: **18.06.2025**
(21) Anmeldenummer: 22166204.2
(22) Anmeldetag: 31.03.2022
(51) Int. Cl.: B64D 11/06

(54) **PASSAGIERSITZ FÜR EIN FAHRZEUG MIT INTEGRIERTER RETTUNGSWESTE**
PASSENGER SEAT FOR VEHICLE WITH INTEGRATED SAFETY VEST
SIÈGE DE PASSAGER POUR VÉHICULE AVEC GILET DE SÉCURITÉ INTÉGRÉ

(43) Veröffentlichungstag der Anmeldung: 04.10.2023
(73) Patentinhaber: Airbus Operations GmbH, 21129 Hamburg (DE)
(72) Erfinder: Muin, Andrew, 21129 Hamburg (DE); Sontag, Stephan, 21129 Hamburg (DE)

(56) Entgegenhaltungen:
- EP-A1- 0 147 376
- US-A- 5 342 109
- US-A- 6 152 527

## Beschreibung

### Technisches Gebiet

Die Erfindung betrifft einen Passagiersitz für ein Fahrzeug und ein Fahrzeug mit mindestens einem derartigen Passagiersitz.

### Technischer Hintergrund

Passagiersitze in Verkehrsflugzeugen weisen üblicherweise ein Sitzgestell auf, welches eine Sitzfläche und eine Rückenlehne trägt. Unterhalb der Sitzfläche befindet sich üblicherweise ein verschließbarer Behälter, in dem eine kompaktierte Rettungsweste angeordnet ist. Es kann vorkommen, dass Passagiere eines Luftfahrzeugs während des Flugs eine Rettungswesten entwenden. Weiterhin ist der Stauraum unterhalb der Sitzfläche aufgrund des Behälters für Rettungswesten begrenzt. Eine Sichtkontrolle, ob in einem Behälter eine Rettungsweste angeordnet ist oder ob sich dort verbotene oder unerwünschte Gegenstände befinden, ist aufgrund der Lage des Behälters aufwendig.

US 5 342 109 A zeigt einen Sitz mit Rettungsring, bestehend aus einem Sitz mit einer Rückenlehne und einer Sitzfläche, einer Schwimmweste, die in einen in der Rückenlehne gebildeten Hohlraum eingepasst ist, und einer Klappe im Bezugsmaterial deren eine Kante mit dem Bezugsmaterial verbunden ist und sich über die Schwimmweste erstreckt. US 6 152 527 A zeigt einen Beifahrersitz für ein Fahrzeug, das über oder auf dem Wasser fährt, und umfasst eine am Fahrzeug befestigte Basis zum Stützen der unteren Extremitäten des Beifahrers. Eine Sitzlehne erstreckt sich von der Basis nach oben und stützt den Rücken des Passagiers. Mindestens eine Schwimmweste bildet einen Teil der Rückenlehne, die eine abnehmbare Hülle mit einem durchsichtigen oberen Teil aufweist.

EP 0 147 376 A1 bezieht sich auf eine Rettungswestenanordnung, die in erster Linie für Flugzeugpassagiere bestimmt ist, einschließlich eines Auftriebskörpers, der zumindest den Hauptteil des Auftriebs liefert, und Gurte oder dergleichen, die dazu geeignet sind, die Rettungswestenanordnung an Personen in Position zu halten.

### Beschreibung

Es kann als Aufgabe betrachtet werden, einen Passagiersitz vorzuschlagen, bei dem eine alternative Aufbewahrung einer Rettungsweste möglich ist.

Die Aufgabe wird gelöst durch einen Passagiersitz mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Passagiersitz für ein Fahrzeug vorgeschlagen, aufweisend ein Sitzgestell, eine Sitzfläche, eine Rückenlehne, und eine Rettungsweste, wobei die Rückenlehne ein Rückenpolster und eine Abdeckung umfasst, wobei das Rückenpolster eine Vertiefung umfasst, die an die Rettungsweste angepasst ist, sodass die Rettungsweste in die Vertiefung einlegbar ist und zumindest bereichsweise bündig mit dem Rückenpolster abschließt, wobei die Abdeckung eine Hauptfläche und einen die Hauptfläche größtenteils umgebenden, streifenartigen Rand aufweist, der auf Randflächen des Rückenpolsters aufliegen kann, und wobei die Abdeckung auf dem Rückenpolster befestigbar ist und dazu ausgebildet ist, das Rückenpolster unter Einschluss der Vertiefung und der Rettungsweste abzudecken.

Der Passagiersitz ist grundsätzlich auf sehr ähnliche Weise wie ein herkömmlicher Passagiersitz aufgebaut. Das Sitzgestell könnte aus einem metallischen Material bestehen und vordere sowie hintere Sitzbeine umfassen. Diese könnten Tragrohre halten, die im Wesentlichen waagerecht angeordnet sind und Sitzflächen sowie Rückenlehnen tragen. Ein solches Sitzgestell könnte dazu ausgebildet sein, einen, zwei, drei, vier, oder fünf Sitze aufzunehmen oder auszubilden.

Die einem Passagier direkt zugewandten Komponenten werden aus jeweils einer Sitzfläche und eine Rückenlehne gebildet. Die Sitzfläche ist dabei im Wesentlichen waagerecht bzw. horizontal angeordnet und die Rückenlehne erstreckt sich quer dazu. Die Sitzfläche könnte ein Sitzpolster aufweisen, das mit einem Bezug versehen ist. Die Rückenlehne weist das Rückenpolster auf, welches an einem flächigen oder schalenartigen Rückenlehnenaufbau befestigt ist. Das Rückenpolster kann eine Stärke von wenigen Zentimetern, etwa in einem Bereich von 1 bis 5 cm und bevorzugt etwa 1,5 cm, aufweisen und aus einem Schaumstoff hergestellt sein.

Erfindungsgemäß ist vorgesehen, dass das Rückenpolster eine Ausnehmung umfasst, die an eine Rettungsweste angepasst ist. Die Rettungsweste könnte beispielsweise einen U-förmigen Aufbau aufweisen, an dem Gurte zum Anlegen der Rettungsweste befestigt sind. Der Aufbau könnte aufblasbar sein, insbesondere automatisch aufblasbar. Es könnten eine Leuchte, Kabel und ein Energiespeicher daran angeordnet sein. Die Rettungsweste ist in die Ausnehmung des Rückenpolster einlegbar, sodass das Rückenpolster und die Rettungsweste zumindest bereichsweise bündig miteinander abschließen. Dies ist derart zu verstehen, dass eine von der Rückseite der Rückenlehne abgewandte vordere Fläche möglichst durchgehend und ohne größere Tiefensprünge ausgeführt ist. Die Rettungsweste ergänzt folglich die Ausnehmung zu einem vollständigen Rückenpolster. Die Rettungsweste kann in einem nicht aufgeblasenen Zustand eine Stärke von lediglich etwa 5 mm aufweisen. Die Ausnehmung in dem Rückenpolster ist hieran angepasst.

Die Rückenlehne wird durch die Abdeckung ergänzt, welche auf der Vorderseite des Rückenpolsters und der Rettungsweste angebracht wird. Die Rettungsweste wird damit zwischen dem Rückenpolster und der Abdeckung eingeschlossen, ist von außen praktisch nicht sichtbar, wird geschützt und ist vor Entwendung während des Sitzens auf dem Passagiersitz geschützt. Wie weiter nachfolgend noch erläutert wird, ist bevorzugt ein Sichtfenster vorgesehen, durch das das Vorhandensein der Rettungsweste prüfbar ist. An Bereichen außerhalb des Sichtfensters unterscheidet sich die Rückenlehne nicht von einer herkömmlichen Rückenlehne.

Der erfindungsgemäße Passagiersitz ist besonders vorteilhaft, da die Rettungsweste einerseits besonders platzsparend an dem Passagiersitz angebracht ist. Ein separater Behälter unterhalb der Sitzfläche ist nicht notwendig. Andererseits wird die Gefahr verringert, dass in einem Behälter für Rettungswesten verbotene Gegenstände versteckt werden. Unterhalb der Sitzfläche besteht ein größtmöglicher Stauraum für Gepäck. Zudem ist, in einer vorteilhaften Ausführungsform, die Rettungsweste in einem nicht gefalteten Zustand eingelegt, sodass das Entnehmen und Aufsetzen vereinfacht wird.

In einer vorteilhaften Ausführungsform ist die Vertiefung dazu ausgebildet, die Rettungsweste in einem ungefalteten Benutzungszustand aufzunehmen. Der Benutzer kann folglich direkt nach ihrer Entnahme die Rettungsweste aufsetzen und es besteht keine Notwendigkeit, die Rettungsweste auszufalten oder eine Anleitung zu studieren, wie die Rettungsweste auszufalten und anzulegen ist. Dies kann den Vorgang des Anlegens der Rettungsweste deutlich beschleunigen und eine Unsicherheit der Passagiere im Umgang damit deutlich verringern.

In einer vorteilhaften Ausführungsform weist die Abdeckung ein Sichtfenster auf, das derart positioniert ist, dass von außerhalb des Passagiersitzes ein Teil der Rettungsweste durch das Sichtfenster sichtbar ist. Damit wird eine leichte Sichtprüfung ermöglicht, denn Kabinenpersonal kann unmittelbar durch Betrachtung des Sichtfensters sehen, ob sich eine Rettungsweste ordnungsgemäß innerhalb der Rückenlehne befindet. Es ist vorstellbar, dass sich das Sichtfenster bei auf dem Rückenpolster angeordneter Abdeckung in einem oberen Bereich der Ausnehmung befindet, beispielsweise mittig an der Rückenlehne. Es wäre zudem denkbar, das Sichtfenster etwas außermittig zu platzieren, sodass das Sichtfenster bei sitzendem Passagier sichtbar ist. Bevorzugt befindet sich das Sichtfenster an dem Rand der Abdeckung und lässt einen Teil der Randfläche des Rückenpolsters erkennen, wobei das Rückenpolster an dieser Stelle so gestaltet ist, dass die Rettungsweste sichtbar ist. Die Vertiefung könnte beispielsweise mit einer zu der betreffenden Randfläche ragenden, in radiale Richtung verlaufenden Ausnehmung münden, die an dem Sichtfenster endet.

In einer vorteilhaften Ausführungsform weist der Passagiersitz ferner ein sichtbares Siegel oder eine sichtbare Verplombung auf, die zwischen der Abdeckung und dem Rückenpolster anbringbar ist. Damit kann zusätzlich sichergestellt werden, dass ein ungewünschtes Entnehmen der Abdeckung nicht erfolgt ist, die Rettungsweste noch nicht entnommen wurde und keine Gegenstände in die Aufnahme gebracht wurden. Das Siegel könnte beispielsweise aus zwei manipulationssicheren, miteinander verbundenen Aufklebern bestehen, die sich nicht beschädigungsfrei voneinander trennen lassen. Die Verplombung könnte mit einem Draht oder einem anderen linienförmigen Verbindungsmittel ausgeführt sein, das durch das Rückenpolster und die Abdeckung geführt ist und dessen Enden untrennbar miteinander verbunden sind. Bei der Entnahme der Abdeckung erfolgt eine Zerstörung des Verbindungsmittel, die optisch eindeutig erkennbar ist.

Erfindungsgemäß weist die Abdeckung einen Rand auf, der dazu ausgebildet ist, eine Randfläche des Rückenpolsters abzudecken. Der Rand könnte an einer, zwei, drei oder vier Kanten der Abdeckung angeordnet und als Streifen ausgebildet sein. Dieser Streifen könnte quer zu einer Hauptfläche der Abdeckung abgewinkelt werden. Die Hauptfläche der Abdeckung kann auf das Rückenpolster und die Rettungsweste aufgelegt werden und der Rand, d.h. ein Randstreifen, kann auf korrespondierende Randflächen des Rückenpolsters gelegt werden. Hierdurch kann ein formschöner Abschluss bereitgestellt werden, der zudem einem Verrutschen der Hauptfläche entgegenwirken kann.

In einer vorteilhaften Ausführungsform ist die Abdeckung mittels Klettverbindern an dem Rückenpolster anbringbar. Die Abdeckung kann daher sehr leicht von dem Rückenpolster entnommen oder daran befestigt werden. Die Klettverbinder werden paarweise an der Abdeckung und dem Rückenpolster angebracht. Sie können entlang einer vorbestimmten Linie verlaufen oder daran entlang verteilt sein. Die Anzahl der Klettverbinder ist derart zu wählen, dass ein ausreichendes Halten der Abdeckung und ein einfaches Lösen ermöglicht werden.

In einer vorteilhaften Ausführungsform sind die Klettverbinder an einer Vorderseite oder an Randflächen des Rückenpolsters und damit korrespondierenden Stellen der Abdeckung angeordnet. Beispielsweise können die Klettverbinder entlang einer umlaufenden Linie angebracht sein, welche sich in einem Abstand zu den Randflächen der Rückenlehne erstreckt. Es ist vorstellbar, dass sich mehrere, punktförmige Klettverbinder entlang dieser Kontur befinden.

In einer vorteilhaften Ausführungsform ist die Abdeckung einstückig ausgeführt. Dann kann etwa eine Seite oder ein Rand der Abdeckung gegriffen werden, um die Abdeckung von dem Rückenpolster abzuziehen. Dadurch wird unmittelbar und vollständig die Rettungsweste zugänglich gemacht.

In einer vorteilhaften Ausführungsform weist die Abdeckung ein an einer Außenseite angeordnetes Zugmittel auf, mit dem die Abdeckung abziehbar ist. Beispielsweise könnte das Zugmittel eine Schlaufe sein, die eine entsprechende Beschriftung oder Farbgebung umfasst. Es ist vorstellbar, dass sie sich an einer Oberkante der Rückenlehne befindet und sich für jeden Passagier erkennbar präsentiert. Das Zugmittel könnte in die Abdeckung integriert oder damit vernäht sein, wobei die Klettverbinder oder anderen Verbindungsmittel derart angeordnet sind, dass durch das Ziehen des Zugmittels unmittelbar ein Abreißen der Abdeckung erfolgen kann.

In einer vorteilhaften Ausführungsform umfasst das Sitzgestell direkt unterhalb der Sitzfläche einen zu einer Unterseite des Sitzgestells reichenden Aufnahmeraum zum Aufnehmen von Gepäckstücken. Wie eingangs erwähnt wird der Gepäckraum unterhalb der Sitzfläche dadurch maximiert und größere Handgepäckstücke könnten unter der Sitzfläche sehr bequem angeordnet werden. Zudem ist die Wahrscheinlichkeit gering, dass unerwünschte oder verbotene Gegenstände in einem Behälter unterhalb der Sitzfläche angeordnet werden.

Die Erfindung betrifft ferner ein Fahrzeug, aufweisend eine Kabine mit einem Fußboden und mehreren darauf angeordneten Passagiersitzen nach der vorhergehenden Beschreibung.

In einer vorteilhaften Ausführungsform ist das Fahrzeug ein Luftfahrzeug.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Rückenlehne mit integrierter Rettungsweste gemäß einem Ausführungsbeispiel.
- Fig. 2: eine schematische Darstellung eines Rückenpolsters mit Vertiefung.
- Fig. 3: eine schematische Darstellung des Rückenpolsters und einer darauf anbringbaren Abdeckung.
- Fig. 4: schematische Vorderansichten der Abdeckung, des Rückenpolsters und der Rettungsweste.
- Fig. 5: eine schematische Darstellung einer Passagiersitzanordnung.
- Fig. 6: eine schematische Darstellung eines Hinweisschildes an dem Rückenpolster.
- Fig. 7: eine schematische Darstellung eines Sichtfensters und einer Verplombung.
- Fig. 8: eine räumliche Darstellung eines Luftfahrzeugs, in dem in den vorhergehenden Figuren gezeigte Passagiersitze mit integrierten Rettungswesten angeordnet sind.

### Detaillierte Beschreibung von Ausführungsbeispielen

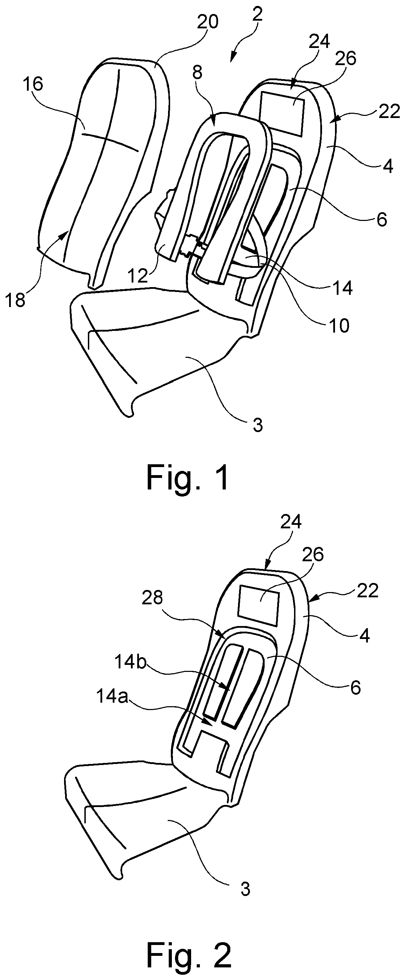

Fig. 1 zeigt eine Rückenlehne 2 und eine Sitzfläche 3 eines Passagiersitzes für ein Fahrzeug, insbesondere für ein Luftfahrzeug. Die Sitzfläche 3 ist als ein durchgehendes Polster mit einem darauf befindlichen Bezug ausgeführt und für die Erfindung im Wesentlichen nicht relevant. Die Rückenlehne 2 weist ein Rückenpolster 4 auf, das eine Vertiefung 6 umfasst, in die eine Rettungsweste 8 einbringbar ist. Die Vertiefung 6 ist an die Rettungsweste 8 angepasst und weist hierfür beispielsweise die Form des umgedrehten Buchstabens U auf. Die Rettungsweste 8 weist Bänder 10 auf, die an einem Auftriebskörper 12 angebracht sind. Die Vertiefung 6 weist zur Aufnahme der Bänder 10 einen entsprechend geformten, zusätzlichen Vertiefungsabschnitt 14 auf. Der Auftriebskörper 12 ist nicht aufgeblasen, sodass die Rettungsweste 8 eine besonders kompakte Form aufweist, jedoch nicht zusammengefaltet, sondern in einem Benutzungszustand vorliegt.

Zum Aufblasen des Auftriebskörpers 12 kann eine entsprechende Vorrichtung an der Rettungsweste 8 angeordnet sein (nicht gezeigt).

Zum Komplettieren der Rückenlehne 2 ist eine Abdeckung 16 vorgesehen, die aus einem geeigneten Textil ausgebildet ist und das Rückenpolster 4 vollständig unter Einschluss der Rettungsweste 8 abdeckt. Die Abdeckung 16 weist eine Hauptfläche 18 und einen die Hauptfläche 18 größtenteils umgebenden, streifenartigen Rand 20 auf. Während die Hauptfläche 18 auf dem Rückenpolster 4 und der Rettungsweste 8 anliegt, kann der Rand 20 auf Randflächen 22 des Rückenpolsters 4 aufgelegt werden.

Beispielhaft ist an der Oberseite 24 des Rückenpolsters 4, d.h. unterhalb der Abdeckung 16, ein Hinweisschild 26 mit Instruktionen zum Anlegen der Rettungsweste 8 und zum Verhalten in einem Notfall vorgesehen. Das Hinweisschild 26 wird auch als "safety on board card" oder "emergency card" bezeichnet. Ein Benutzer, der die Abdeckung 16 von dem Rückenpolster 4 entfernt sieht aufgrund seiner Position unmittelbar das Hinweisschild 26. Das Hinweisschild 26 kann aus einem etwas dickeren Textil oder einem anderen biegeweichen Material bestehen, sodass sich ihre Form an die Form des Rückenpolsters anpassen kann. Das Material sollte dabei ausreichend stabil in der Hand gehalten werden können, ohne dass es zusammenfällt. Es ist denkbar, dass das Hinweisschild 26 mit Klettband abnehmbar an dem Rückenpolster 4 befestigbar ist. Dies stellt einen wesentlichen Sicherheitsfaktor zur Information über Notausgänge und das Verhalten in Notsituationen dar. Durch die Platzierung mit der Rettungsweste 8 zusammen auf dem Rückenpolster 4 unter der Abdeckung 16 kann einer Entwendung entgegengewirkt werden.

In Fig. 2 wird die Vertiefung 6 im Detail dargestellt. Neben einem Hauptabschnitt 28 sind hier zusätzliche Vertiefungsabschnitte 14a und 14b vorgesehen, um die Bänder 10 und andere Komponenten der Rettungsweste 8 aufzunehmen. Der Hauptabschnitt 28 und die Vertiefungsabschnitte 14a und 14b können unterschiedliche Tiefen aufweisen. Die Vertiefung 6 ist derart ausgebildet, dass bei eingelegter Rettungsweste 8 das Rückenpolster 4 und die Rettungsweste 8 gemeinsam eine möglichst durchgehende, ebene Fläche bilden.

Zum Befestigen der Abdeckung 16 sind Klettverbinder 30 vorgesehen, die hier durch Kreise schematisch angedeutet werden. In der Darstellung sind die Klettverbinder 30 beispielhaft entlang einer Kontur 32 verteilt, die auf dem Rand 20 verläuft. Die Klettverbinder 30 können paarweise aus Haken- und Flauschbändern bestehen. Alternativ dazu sind auch Paare von Pilzkopfbändern denkbar. Gegenstücke zu den an dem Rand 20 verteilten Klettverbindern 30 sind in diesem Beispiel an der Randfläche 22 angeordnet.

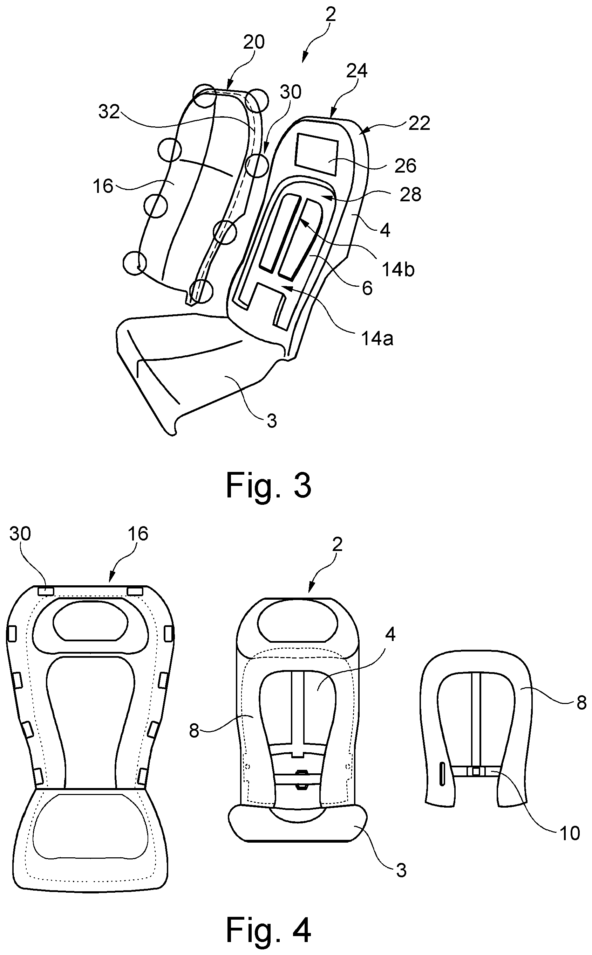

Fig. 4 stellt noch einmal die wesentlichen Komponenten der Rückenlehne dar. Links in der Zeichnung ist die Abdeckung 16 in einer flachen, ausgefalteten Form gezeigt. In der Mitte der Figur ist die Rückenlehne 2 mit integrierter Rettungsweste 8 dargestellt, die der Vollständigkeit halber rechts in Fig. 4 in der Draufsicht gezeigt ist. Es ist besonders vorteilhaft, dass die Rettungsweste 8 nicht aufgeblasen und nicht zusammengefaltet ist, um ein sehr einfaches Entnehmen und Anlegen nach dem Entfernen der Abdeckung 16 zu gewährleisten.

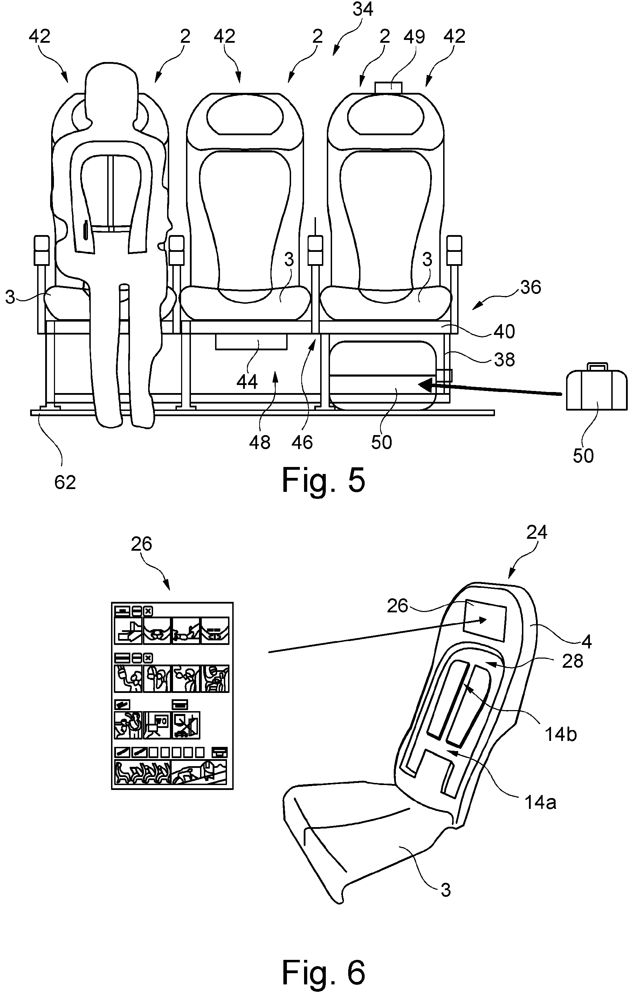

Fig. 5 zeigt eine Passagiersitzanordnung 34 mit einem Sitzgestell 36, das Sitzbeine 38 und Tragrohre 40 aufweist und auf einem Fußboden 62 angeordnet ist. Hier sind beispielhaft drei Passagiersitze 42 gebildet, die jeweils aus einer Sitzfläche 3 und eine Rückenlehne 2 bestehen. Unter dem mittleren Sitz 42 ist mit gestrichelten Linien ein im Stand der Technik üblicherweise vorgesehener Behälter 44 angedeutet, der üblicherweise für die Aufnahme von zusammengefalteten Rettungswesten 8 verwendet wird. Stattdessen kann jedoch erfindungsgemäß direkt unterhalb der Sitzfläche 3 ein zu einer Unterseite 46 des Sitzgestells 36 reichender Aufnahmeraum 48 zum Aufnehmen von Gepäckstücken 50 vorgesehen sein.

In dieser Darstellung ist schematisch eine Lasche 49 oder Schlaufe als Zugmittel dargestellt, die von einem Benutzer gegriffen werden kann, um die Abdeckung 16 abzureißen. Die Lasche 49 kann stets von der Abdeckung abstehen oder lediglich farblich markiert sein. Eine auffällige Beschriftung, beispielsweise mit dem Begriff "pull" könnte vorgesehen sein.

Wie zu Fig. 1 erwähnt und in Fig. 6 gezeigt, kann eine Oberseite 24 des Rückenpolsters 4 ein Hinweisschild 26 mit einer Anleitung zum Anlegen und Benutzen der Rettungsweste 8 sowie für Verhaltensweisen im Notfall aufweisen.

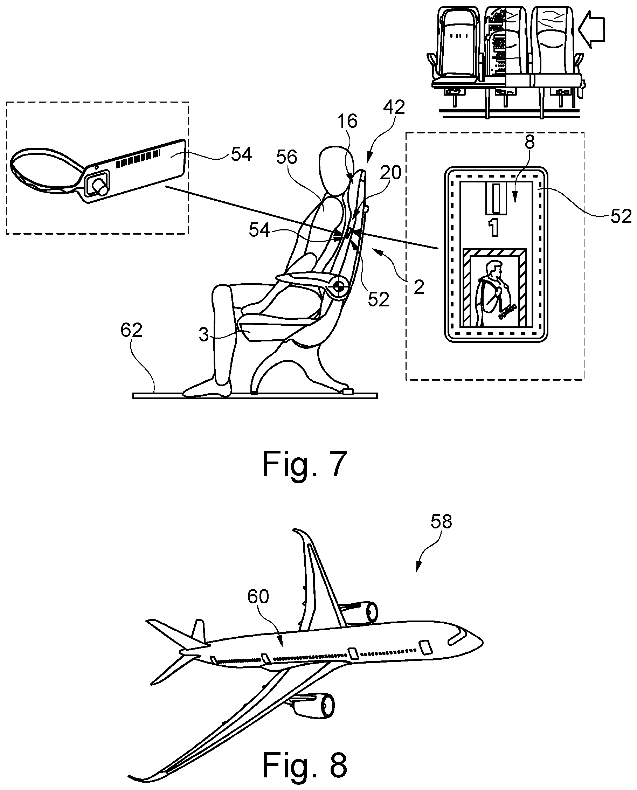

Fig. 7 zeigt weiterhin einen Passagiersitz 42 in einer Seitenansicht. Hier ist ein Sichtfenster 52 erkennbar, das in diesem Beispiel in den Rand 20 der Abdeckung 16 eingearbeitet ist. Das Sichtfenster 52 erlaubt das Erkennen des Vorhandenseins der Rettungsweste 8 in der Vertiefung 6. Damit kann direkt von einem Gang bei jedem Passagiersitz 42 geprüft werden, ob die Rettungswesten 8 vorhanden sind.

Weiter zusätzlich ist eine Verplombung 54 vorgesehen, die beim Abnehmen der Abdeckung 16 reißt. Greift ein Benutzer 56 die Abdeckung 16 und entfernt sie von dem Rückenpolster 4, wird die Verplombung 54 zerstört. Dies ist unmittelbar erkennbar und kann dazu genutzt werden, das Vorhandensein und den ordnungsgemäßen Zustand der Rettungsweste 8 in dem betreffenden Passagiersitz 42 zu prüfen.

Schließlich zeigt Fig. 8 ein Luftfahrzeug 58, in dem eine Kabine 60 mit einem Fußboden 62 und mehreren darauf angeordneten Passagiersitzen 42 vorgesehen ist.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Passagiersitz (42) für ein Fahrzeug, aufweisend:
ein Sitzgestell (36),
eine Sitzfläche (3),
eine Rückenlehne (2), und
eine Rettungsweste (8),
wobei die Rückenlehne (2) ein Rückenpolster (4) und eine Abdeckung (16) umfasst,
wobei das Rückenpolster (4) eine Vertiefung (6) umfasst, die an die Rettungsweste (8) angepasst ist, sodass die Rettungsweste (8) in die Vertiefung (6) einlegbar ist und zumindest bereichsweise bündig mit dem Rückenpolster (4) abschließt,
wobei die Abdeckung (16) eine Hauptfläche (18) und einen die Hauptfläche (18) größtenteils umgebenden, streifenartigen Rand (20) aufweist, der auf Randflächen (22) des Rückenpolsters (4) aufliegen kann, und
wobei die Abdeckung (16) auf dem Rückenpolster (4) befestigbar ist und dazu ausgebildet ist, das Rückenpolster (4) unter Einschluss der Vertiefung (6) und der Rettungsweste (8) abzudecken.

2. Passagiersitz (42) nach Anspruch 1,
wobei die Vertiefung (6) dazu ausgebildet ist, die Rettungsweste (8) in einem ungefalteten Benutzungszustand aufzunehmen.

3. Passagiersitz (42) nach Anspruch 1 oder 2,
wobei die Abdeckung (16) ein Sichtfenster (52) aufweist, das derart positioniert ist, dass von außerhalb des Passagiersitzes (42) ein Teil der Rettungsweste (8) durch das Sichtfenster (52) sichtbar ist.

4. Passagiersitz (42) nach einem der vorhergehenden Ansprüche,
ferner aufweisend ein sichtbares Siegel oder eine sichtbare Verplombung (54), die zwischen der Abdeckung (16) und dem Rückenpolster (4) anbringbar ist.

5. Passagiersitz (42) nach einem der vorhergehenden Ansprüche,
wobei die Abdeckung (16) mittels Klettverbindern (30) an dem Rückenpolster (4) anbringbar ist.

6. Passagiersitz (42) nach Anspruch 5,
wobei die Klettverbinder (30) an einer Vorderseite oder an Randflächen (22) des Rückenpolsters (4) und damit korrespondierenden Stellen der Abdeckung (16) angeordnet sind.

7. Passagiersitz (42) nach einem der vorhergehenden Ansprüche,
wobei die Abdeckung (16) einstückig ausgeführt ist.

8. Passagiersitz (42) nach einem der vorhergehenden Ansprüche,
wobei die Abdeckung (16) ein an einer Außenseite angeordnetes Zugmittel (49) aufweist, mit dem die Abdeckung (16) abziehbar ist.

9. Passagiersitz (42) nach einem der vorhergehenden Ansprüche,
wobei das Sitzgestell (36) direkt unterhalb der Sitzfläche (3) einen zu einer Unterseite (46) des Sitzgestells (36) reichenden Aufnahmeraum (48) zum Aufnehmen von Gepäckstücken (50) umfasst.

10. Fahrzeug (58), aufweisend eine Kabine (60) mit einem Fußboden (62) und mehreren darauf angeordneten Passagiersitzen (42) nach einem der vorhergehenden Ansprüche.

11. Fahrzeug (58) nach Anspruch 10, wobei das Fahrzeug (58) ein Luftfahrzeug (58) ist.

## Claims

1. A passenger seat (42) for a vehicle, comprising
a seat frame (36),
a seat surface (3)
a backrest (2), and
a life jacket (8),
wherein the backrest (2) has a back cushion (4) and a cover (16),
wherein the back cushion (4) has a recess (6) which is adapted to the life jacket (8), so that the life jacket (8) can be inserted into the recess (6) and is flush with the back cushion (4) at least in some areas,
wherein the cover (16) has a main surface (18) and a strip-shaped edge (20) which largely surrounds the main surface (18) and which can rest on edge surfaces (22) of the back cushion (4), and
wherein the cover (16) can be fastened to the back cushion (4) and is designed such that it covers the back cushion (4) and thereby encloses the recess (6) and the life jacket (8).

2. Passenger seat (42) according to claim 1,
wherein the recess (6) is designed to accommodate the life jacket (8) in an unfolded state of use.

3. Passenger seat (42) according to claim 1 or 2,
wherein the cover (16) has a viewing window (52) which is arranged such that a part of the lifejacket (8) is visible from outside the passenger seat (42) through the viewing window (52).

4. Passenger seat (42) according to any of the preceding claims,
further comprising a visible seal or a visible gasket (54) attachable between the cover (16) and the back cushion (4).

5. Passenger seat (42) according to one of the preceding claims,
wherein the cover (16) is attachable to the back cushion (4) by means of hook-and-loop fasteners (30).

6. Passenger seat (42) according to claim 5,
wherein the hook-and-loop fasteners (30) are arranged on a front side or on edge surfaces (22) of the back cushion (4) and corresponding locations of the cover (16).

7. Passenger seat (42) according to one of the preceding claims,
wherein the cover (16) is made in one piece.

8. Passenger seat (42) according to one of the preceding claims,
wherein the cover (16) comprises a pulling means (49) arranged on an outer side, with which the cover (16) can be pulled off.

9. Passenger seat (42) according to one of the preceding claims,
wherein the seat frame (36) directly below the seat surface (3) comprises a receiving space (48) extending to an underside (46) of the seat frame (36) for receiving pieces of luggage (50).

10. Vehicle (58), comprising a cabin (60) with a floor (62) and a plurality of passenger seats (42) arranged thereon according to one of the preceding claims.

11. Vehicle (58) according to claim 10, wherein the vehicle (58) is an aircraft (58).

## Revendications

1. Siège de passager (42) pour un véhicule, comprenant :
une armature de siège (36),
une surface d'assise (3),
un dossier (2), et
un gilet de sauvetage (8),
le dossier (2) comprenant un coussin de dossier (4) et un couvercle (16),
le rembourrage de dossier (4) comprenant un renfoncement (6) qui est adapté au gilet de sauvetage (8), de sorte que le gilet de sauvetage (8) peut être inséré dans le renfoncement (6) et se termine au moins par endroits à fleur avec le rembourrage de dossier (4),
le recouvrement (16) présentant une surface principale (18) et un bord (20) en forme de bande entourant en grande partie la surface principale (18), qui peut reposer sur des surfaces de bord (22) du rembourrage de dos (4), et
dans lequel le couvercle (16) peut être fixé sur le coussin dorsal (4) et est conçu pour recouvrir le coussin dorsal (4) en incluant le renfoncement (6) et le gilet de sauvetage (8).

2. Siège de passager (42) selon la revendication 1,
dans lequel le renfoncement (6) est adapté pour recevoir le gilet de sauvetage (8) dans un état d'utilisation non plié.

3. Siège de passager (42) selon la revendication 1 ou 2,
dans lequel le couvercle (16) comprend une fenêtre d'observation (52) positionnée de telle sorte qu'une partie du gilet de sauvetage (8) est visible à travers la fenêtre d'observation (52) depuis l'extérieur du siège de passager (42).

4. Siège de passager (42) selon l'une quelconque des revendications précédentes,
comprenant en outre un sceau ou un plomb visible (54) pouvant être placé entre le couvercle (16) et le coussin de dossier (4).

5. Siège de passager (42) selon l'une des revendications précédentes,
dans lequel le couvercle (16) peut être fixé au coussin de dossier (4) au moyen d'attaches velcro (30).

6. Siège de passager (42) selon la revendication 5,
dans lequel les connecteurs auto-agrippants (30) sont disposés sur une face avant ou sur des surfaces de bord (22) du rembourrage de dossier (4) et sur des emplacements correspondants du couvercle (16).

7. Siège de passager (42) selon l'une des revendications précédentes,
dans lequel le couvercle (16) est réalisé d'une seule pièce.

8. Siège de passager (42) selon l'une des revendications précédentes,
dans lequel le couvercle (16) comporte un moyen de traction (49) disposé sur une face extérieure et permettant de retirer le couvercle (16).

9. Siège de passager (42) selon l'une quelconque des revendications précédentes,
dans lequel l'armature de siège (36) comprend, directement en dessous de l'assise (3), un espace de réception (48) s'étendant jusqu'à une face inférieure (46) de l'armature de siège (36) pour recevoir des bagages (50).

10. Véhicule (58) comprenant une cabine (60) avec un plancher (62) et une pluralité de sièges passagers (42) disposés sur celui-ci selon l'une quelconque des revendications précédentes.

11. Véhicule (58) selon la revendication 10, dans lequel le véhicule (58) est un aéronef (58).
